# EUROPEAN PATENT APPLICATION

(11) **EP 3 825 086 A1**
(43) Date of publication of application: **26.05.2021**
(21) Application number: 20209187.2
(22) Date of filing: 23.11.2020
(51) Int. Cl.: B27N 1/00, B27N 3/02, B27N 3/18, B29C 70/56, B27N 7/00, B27N 3/28, B27N 3/04

(54) **COMPOSITE WOOD WITH REINFORCING ELEMENT**

(30) Priority: 21.11.2019 BE 201905819
(71) Applicant: Bilterijst NV, 9220 Wetteren (BE)
(72) Inventor: LEEMANS, Eric, 9200 Dendermonde (BE)
(74) Representative: DenK iP bv

(57) **Abstract**

In a first aspect, the present invention relates to a composite wood (10) comprising: (i) wood chips (20), wherein the wood chips comprise fibres and/or threads and/or pieces and/or lumps of hardwood and/or softwood and/or bamboo, (ii) a binding agent (30), in which the binding agent is an adhesive with swelling capacity, and (iii) a tendon (40); wherein the wood chips (20) and the binding agent (30) are cured around the tendon (40).

## Description

### Scope of the invention

This invention generally relates to composite wood and, more specifically, to composite wood reinforced with an internal element.

### Background of the invention

Various types of composite wood are already known, for example including particle board, OSB, MDF, HDF, plywood, etc. Composite wood has various applications and, for example, is often used as a substitute for solid wood. The advantages are numerous, but include, among others: the versatility in properties and design that can be obtained and the efficient use of wood (including wood waste).

A disadvantage of composite wood, however, is that it is often less solid than solid wood, particularly under humid conditions. Deformation - whether or not as a result of moisture - of the composite wood, such as warping, is then also a recurring problem. Composite wood is therefore often not used in outdoor applications, where it is freely exposed to rain and wind.

Consequently, there is still a need for a composite wood that overcomes the above disadvantages at least partly.

### Summary of the invention

It is an objective of embodiments of the present invention to provide a reinforced composite wood. Provision of associated production methods and products is a further objective of embodiments of this invention. This objective shall be achieved by composite wood, methods, uses and products according to this invention.

It is an advantage of embodiments of the present invention that the composite wood can cope better with loads (e.g. tensile stress) than a similar composite wood without a tendon. A further advantage of embodiments of the present invention is that the composite wood resists bending and shearing better.

It is an advantage of embodiments of the present invention that the composite wood is more elastic than a similar composite wood without a tendon.

It is an advantage of embodiments of the present invention that the composite wood is less likely to become deformed and thus remains more rigid than a similar composite wood without a tendon.

It is an advantage of embodiments of the present invention that the composite wood is less likely to crack due to shrinkage when drying out than solid wood.

It is an advantage of embodiments of the present invention that the composite wood resists rain, wind - or other damp conditions - better than a similar composite wood without a tendon, but also better than a similar composite wood in which a different binding agent has been used.

It is an advantage of embodiments of the present invention that different types of composite wood can be improved.

It is an advantage of embodiments of the present invention that different types of wood can be used for the composite wood.

It is an advantage of embodiments of the present invention that products with good properties, suitable for use in all kinds of applications, can be obtained in a relatively cheap and more ecological/sustainable way.

It is an advantage of embodiments of the present invention that a wear-resistant composite wood can be obtained.

It is an advantage of embodiments of the present invention that a composite wood with an aesthetically pleasant appearance can be obtained.

A surprising discovery of this invention was that the introduction of a tendon into a composite wood results in a considerably firmer composite wood. Without being bound by theory, it is suspected that composite wood is typically more resistant to compressive stress than tensile stress. This property can then be exploited by placing the composite wood-by means of the pre-stressed tendon-under a continuous compressive stress. As a result, when an external tensile stress is exerted, it is counteracted, whereby - naturally depending on the pre-tension used and the external tensile stress-the vector sum of an external tensile stress and the internal compressive stress is often still a net compressive stress. This composite wood is thus more resistant to stress (in particular tensile stress), has a better elasticity and better dimensional stability (e.g. by preventing curvature, bending and/or shearing) as compared to a similar composite wood without a tendon.

In order to have a qualitative understanding, an analogy can for example be made with pre-stressed concrete, in which a tendon, after pre-stressing, exerts a compressive stress on the concrete. However, it will be clear that the properties of concrete and composite wood differ significantly and that they belong to different fields of application. The knowledge about (pre-stressed) concrete is, therefore, not directly translatable to composite wood; this ex-post facto analogy, which is given here only for easier understanding, should therefore not detract from the originality of this invention.

A further surprising discovery with this invention was that the use of an adhesive with swelling capacity, also known as swelling adhesive, offers advantages over other binding agents. A swelling adhesive is an adhesive that swells when it dries out or cures.

A first aspect of this invention is that it relates to a composite wood comprising: (i) wood chips, i.e. fibres and/or threads and/or pieces and/or lumps of hardwood and/or softwood and/or bamboo (ii) a binding agent and (iii) a tendon; whereby the wood chips and the binding agent are cured around the tendon. The binding agent is an adhesive with swelling capacity, for example a polyurethane adhesive. As it swells when cured, it closes the pores between the wood chips better. The swelling adhesive, therefore, has a pore-filling capacity. As a result, the composite wood formed will not absorb any or at least less moisture or water and will, therefore, be more resistant to damp conditions. In addition, due to its pore-filling capacity, the binding agent contributes better to force transmission.

A second aspect of this invention relates to a method of making a composite wood according to an embodiment of the first aspect, comprising: (a) the mixing of wood chips with a binding agent to form a mixture, whereby the wood chips comprise fibres and/or threads and/or pieces and/or lumps of hardwood and/or softwood and/or bamboo, and whereby the binding agent is an adhesive with a swelling capacity, (b) the application, e.g. pouring, of the mixture around an element and (c) the curing of the mixture around the element while the said element is being pre-stressed, during or after step c.

A third aspect of this invention relates to the use of a tendon in a composite wood to strengthen the composite wood, wherein the composite wood comprises a binding agent, and whereby the binding agent is an adhesive with swelling properties.

A fourth aspect relates to a product comprising a composite wood according to an embodiment of the first aspect.

Specific and preferential aspects of the invention are included in the attached independent and dependent claims. Characteristics of the dependent claims may be combined with characteristics of the independent claims and with characteristics of other dependent claims as indicated and not merely as expressly set out in the claims.

These and other aspects of the invention will be clear and clarified by reference to the embodiment(s) described below.

### Brief description of the figures

FIG 1 schematically shows the production of a composite wood according to embodiments of the present invention.
FIG 2 schematically shows a composite wood according to embodiments of the present invention.

In the various figures, the same reference numbers refer to the same or similar elements.

### Detailed description of illustrative embodiments

This invention will be described in relation to the particular elements and with reference to specific drawings, but the invention is not limited to those elements but is limited only by the claims. The drawings described are only schematic and not restrictive. In the drawings, the dimensions of some elements may be increased and not drawn to scale, for illustrative purposes. The dimensions and relative dimensions sometimes do not correspond to the actual practical implementation of the invention. Reference numbers in the claims should not be interpreted to reduce the scope of protection.

Furthermore, the terms first, second, third, etc. shall be used in the description and in the claims for distinguishing similar elements and not necessarily for describing a sequence, whether temporal, spatial, in order of precedence or otherwise. It should be understood that the terms used in this way are interchangeable under appropriate circumstances and that the embodiments of the invention described herein are capable of operating in a different order from that described or represented herein.

In addition, the terms top, bottom, in front of, etc. are used for descriptive purposes and not necessarily to describe relative positions. It should be understood that the terms so used may, under certain circumstances, be interchangeable with their antonyms and that the embodiments of the invention described herein can also operate in accordance with orientations other than those described or represented herein.

It should be noted that the terms "comprises" or "includes" are not to be interpreted as limited to the means described subsequently; these terms do not exclude other elements or steps. They may thus be interpreted as specifying the presence of the characteristics, values, steps or components to which reference is made, but do not exclude the presence or addition of one or more other characteristics, values, steps or components, or groups thereof. The terms "comprises" and "includes" therefore cover the situation in which only the characteristics listed are present and the situation in which these characteristics and one or more other characteristics are present. Thus, the scope of the expression "an arrangement comprising items A and B" should not be limited to arrangements consisting of components A and B only. It means that with regard to the current invention, A and B are the only relevant components of the arrangement.

Reference throughout this specification to "one element" or "an element" means that a specific feature, structure or characteristic described in relation to the embodiment is included in at least one element of this invention. Thus, the occurrence of the expressions "in one element" or "in an element" in various places throughout this specification need not necessarily refer to the same element each time, but may do so. Furthermore, the specific features, structures or characteristics may be combined in any appropriate manner, as would be clear to an average person skilled in the art on the basis of this publication, in one or more elements.

Similarly, it should be appreciated that in the description of exemplary embodiments of the invention, several features of the invention are sometimes grouped together into one single element, figure or description thereof with the aim of streamlining the disclosure and helping to understand one or more of the various inventive aspects. In any event, this method of disclosure should not be interpreted as reflecting an intention that the invention requires more features than those explicitly mentioned in any claim. Rather, as the following claims reflect, inventive aspects reside in less than all the features of a single previously publicly disclosed embodiment. Thus, the claims following the detailed description are hereby explicitly included in this detailed description, with each individual claim as a separate element of this invention.

Furthermore, while some of the elements described herein comprise some, but not other, features included in other elements, combinations of features of different elements are intended to be within the scope of the invention and constitute different elements, as would be understood by the person skilled in the art. For example, in the following claims, any of the elements described may be used in any combination.

Numerous specific details are put forward in the description provided here. In any case, it is to be understood that embodiments of the invention can be carried out without these specific details. In other cases, well-known methods, structures and techniques have not been shown in detail in order to keep this description clear.

In a first aspect, the present invention relates to a composite wood comprising: (i) wood chips, wherein the wood chips comprise fibres and/or threads and/or pieces and/or chunks of hardwood and/or softwood and/or bamboo; (ii) a binding agent, whereby the binding agent is an adhesive with swelling properties, and (iii) a tendon; whereby the wood chips and binding agent are cured around the tendon.

A composite wood or engineered wood is a product derived from wood, made by the binding or fixing of wood chips, typically using a binding agent to form a composite. Composite wood is also sometimes referred to as board material; however, it will be clear that the composite wood in the present invention is not limited to a board structure. In embodiments, the composite wood can be panel or beam-shaped, or have any other form as a function of an intended application. The present invention is not specifically limited to certain types of composite wood. Depending on the intended application, a suitable type of composite wood can therefore be chosen. In embodiments, the composite wood can be selected for example from the list of particle board, oriented strand board (OSB), medium-density fibreboard (MDF) and high-density fibreboard (HDF); whereby, again, the word 'board' does not limit the shape. Composite wood should not be confused with wood-plastic composite (WPC)-also called wood composite for short-which is a compressed material made from wood fibres or wood flour and a thermoplastic polymer. Wood-plastic composite can be seen as a type of composite wood in some forms, whereby the thermoplastic polymer is more than the binding agent. Thus, a wood-plastic composite can also be reinforced using a tendon according to the present invention. However, due to the presence of the thermoplastic polymer, wood-plastic composites differ in certain respects from other typical composite wood types. For example, wood-plastic composites are typically quite dimensionally stable in themselves and typically have a higher durability (e.g. with a durability class 1, 2 or 3) than traditional composite wood, which means that they are also used in outdoor applications. Therefore, within the present invention, the composite wood in certain elements is a composite wood that is not a wood-plastic composite.

The tendon is pre-stressed during the making of the composite wood (cf. the second aspect), such that this tendon subsequently exerts a pressure load on the composite wood. In embodiments, the tendon can be made of metal (e.g. a steel element), glass fibre or carbon. Fibreglass and carbon elements are typically more expensive than metal ones but they are, however, typically less susceptible to corrosion. In embodiments, the tendon may consist of one or more wires (e.g. cables) or a bar with protrusions (e.g. a threaded bar). In embodiments, the tendon can be embedded over its entire length in the composite wood (as opposed to, for example, only at the ends). In embodiments, the composite wood can comprise several tendons; such as between 2 and 20, preferably between 3 and 15, more preferably between 4 and 10, most preferably between 5 and 8, such as 6. In embodiments, the tendons may be parallel or cross-oriented, depending on the needs of the internal compressive stress to be applied.

In embodiments, the composite wood can also comprise a non-pre-stressed tendon. Despite the lack of pre-stressing, such a tendon can still come under stress when the composite wood is under load and thus support the element formed by the composite wood in its operation. In embodiments, the non-pre-stressed tendon can be made of metal (e.g. a steel reinforcing element), glass fibre or carbon. In embodiments, the non-pre-stressed tendon may consist of one or more wires (e.g. cables or fibres). For example, the composite wood may have short wires (e.g. with a length of 5 to 200 mm) - mixed with the wood chips and binding agent-which then come under stress when the composite wood is under load.

In embodiments, the wood chips can be fibres and/or threads and/or pieces and/or chunks. In embodiments, the wood chips can have a length of 5 to 120 mm, but be preferably at least 10 mm, such as from 20 to 80 mm. Wood chips of at least a certain minimum length (e.g. at least 5 or 10 mm) benefit the strength of the composite wood. In addition, the production of smaller wood chips typically requires more energy. In embodiments, the wood chips can have a thickness of 2 to 20 mm, such as of 4 and 15 mm. The length and thickness are respectively the longest and shortest dimensions of the wood chips.

In embodiments, the wood chips may comprise hardwood and/or softwood. The wood chips may comprise Azobe wood. Bamboo wood is also seen as a form of wood within this invention although it does not come from a tree but from a lignified grass. The wood chips can also comprise bamboo. In embodiments, the wood chips can comprise various types of wood. In embodiments, the wood chips may originate from wood waste and/or recycled wood and/or inferior wood. The term inferior wood is understood here to mean wood of inferior quality (e.g. lower inherent durability), such that the properties of the wood are in themselves not or less suitable for an intended application. Wood waste, recycled wood and inferior wood are typically widely available and cheaper than new, higher quality full-grade wood. The use of these types of wood also contributes to a more sustainable and ecological process and product.

In principle, the wood chips used are not limited in their durability class; especially when the composite wood includes a covering (see below). Depending on the intended application, wood chips of a suitable durability class can therefore be selected. Nevertheless, it can be advantageous to select wood chips of a higher durability class. In embodiments, the wood chips may comprise wood of durability class 1 and/or 2 and/or 3. The durability class refers to the classification laid down in European Standard EN-350:2016. Composite wood based on wood with this durability allows it to be used advantageously also in outdoor applications (i.e. under humid conditions among others)-this is particularly relevant when the wood chips are directly exposed to the environment, but also when used in cladding. In embodiments, the wood chips may comprise preserved wood. Preserved wood (also referred to as modified wood) is wood whose durability has been increased (e.g. upgraded to a higher durability class) by chemical and/or thermal treatment.

The wood chips used are typically not limited in their strength class. Depending on the intended application, wood chips of a suitable strength class can therefore be selected.

In some embodiments, other vegetable fibres may also be present in addition to wood chips. Such other vegetable fibres include, for example, fibres of rye, wheat, rice, hemp, kenaf, bagasse (sugar cane), jute or cotton. In some embodiments, sawdust, wood pulp or wood flour may also be present in addition to the wood chips. This wood with small dimensions can, for example, advantageously fill up pores in the composite wood.

The binding agent is an agent capable of attaching the wood chips (i.e. wood) to one another and the wood chips to the tendon (e.g. metal, fibreglass or carbon fibre). In embodiments, the binding agent is an adhesive with swelling capacity, which swells when cured. This closes pores and reduces moisture absorption, while improving force transfer. In embodiments, the binding agent can be a wood adhesive of class D3 or D4. In this regard, the class refers to the classification laid down in European Standard NBN EN 204. Composite wood based on adhesives of this class once again enables its advantageous use in outdoor applications (i.e. under humid conditions). It should be noted in this regard that a wood adhesive is suitable for bonding wood, but is not necessarily less suitable for bonding other materials.

In embodiments, the volume ratio of wood chips: binding agent can be 10:90 or higher, preferably 30:70 or higher, more preferably 50:50 or higher, still more preferably 70:30 or higher, most preferably 90:10 or higher, such as 95:5 or higher. Binding agents are typically more expensive than wood chips, which makes it advantageous to make a composite wood with less binding agent and more wood chips. However, if there is too little binding agent, the adhesion of the wood chips is imperfect and thus the strength of the composite wood is compromised. A suitable wood chip: binding agent ratio depends on the size of the wood chips (cf. above).

In embodiments, the binding agent can be a polyurethane adhesive (e.g. Rectavit Rectan) or a polyvinyl acetate adhesive (e.g. Rectavit 233 Ultra); preferably a polyurethane adhesive. A polyurethane adhesive typically has a high shear strength, ensuring a good connection between the wood chips and the tendon-even for a relatively high pre-stress of the tendon. In addition, with a polyurethane adhesive, the wood may typically have a relatively high humidity (e.g. up to 20%, preferably up to 30%, more preferably up to 35%, most preferably up to 40%). This is particularly interesting in the case of very hard woods, such as the Azobé wood species, where the natural drying process is less easy and prolonged. With a polyvinyl acetate adhesive, a moisture content of between 8 and 12% is typically more recommended and is therefore better combined with a softer wood type.

In embodiments, the length of the composite wood can be from 10 cm to 25 m, preferably from 50 cm to 20 m, but more preferably from 1 m to 15 m, most preferably from 2 m to 10 m, such as 6 m. In embodiments, the width of the composite wood can be from 2 cm to 20 m, but preferably from 25 cm to 15 m, more preferably from 50 cm to 10 m, most preferably from 1 m to 5 m, such as 2 m. In embodiments, the thickness of the composite wood can be from 0.2 cm to 5 m, preferably from 0.5 cm to 1 m, more preferably from 1 cm to 50 cm, most preferably from 2 cm to 10 cm, such as 5 cm. In embodiments, the composite wood can be panel or beam-shaped, or any other form in function of an intended application.

In embodiments, at least one surface of the composite wood may comprise a covering; such as a cladding. For example, in embodiments a top and/or bottom of the composite wood can be covered; or all sides of the composite wood can be covered. In preferred embodiments, the covering can be a solid wood covering. For example, the solid wood can be selected from a type of wood as described above for the wood chips; including preserved wood. As the covering in use is typically directly exposed to the environment, the solid wood should preferably have a durability and/or strength class that is at least similar and preferably better than that of the wood chips. In other elements, the covering can be a plastic covering (e.g. rubber), textile covering (e.g. carpet) or any other desirable covering. In some applications, the composite wood may be exposed during use to a variety of external conditions that can lead, for example, to the deterioration and crumbling of the wood chips and binding agent. These can include, for example, a road plate, in which heavy vehicles such as lorries are repeatedly driven over and wear off the surface of the road plate in doing so. In such applications, a more abrasion-resistant covering (e.g. high-grade solid wood boards) can be advantageously used to protect the composite wood (e.g. of wood chips and the binding agent). Additionally or alternatively, the covering can serve as a finish for the composite wood; e.g. by covering the wood chips and the binding agent with a more aesthetic covering. For example, a composite wood with the appearance of solid wood can be obtained. In yet other applications, the covering can fulfil any other useful function (e.g. an anti-slip function).

In embodiments, any characteristic of any embodiment of the first aspect may, independently, be as described accordingly for any embodiment of another aspect.

In a second aspect, the present invention relates to a method of making a composite wood in accordance with an element of the first aspect, comprising: (a) mixing of wood chips with a binding agent to form a mixture, in which the wood chips comprise fibres and/or threads and/or pieces and/or pieces of hardwood and/or softwood and/or bamboo and in which the binding agent is an adhesive with a swelling capacity, (b) application, for example, pouring of the mixture around a tendon, and (c) hardening of the mixture around the tendon; where the tendon is stretched before, during or after step c.

In embodiments, a mould can be used for the method. The mixture can, for example, be poured into the mould in step b and the cured composite wood can be removed from it after step c. In addition, the tendon may be present in the mould even before casting, or the tendon may be applied afterwards (but still as part of step b). The mould typically has a shape that is adapted to an intended composite wood or its application. In embodiments, an extrusion press can be used for the method. For example, the mixture around the tendon can be extruded in step b.

In embodiments, the curing can take place in step c at a temperature and for a period of time as a function of the chosen binding agent. In embodiments, an increased pressure (i.e. higher than normal air pressure) can be applied to the mixture during step c. Through the exertion of pressure on the mixture e.g. compression of the mixture, an even better filling of the spaces between the wood chips can be advantageously brought about (e.g. by the binding agent) - in addition to the effect already obtained by the curing of the adhesive with swelling capacity - as well as a situation where the final composite wood comprises no or at least a minimal amount of cavities.

In embodiments, the tendon can be tensioned under a tensile force of 50 to 250 kN, preferably 100 to 200 kN, such as approximately 150 kN. There are various possibilities for the tensioning (i.e. pre-stressing) of the tendon, which can be roughly divided into two categories: pre-stretching and post-stretching. With pre-stretching, the tendon is stretched during (and typically even before) the curing process in step c. During post-stretching, whereas the tendon is stretched after the mixture has hardened. It will be clear, however, that these can also be combined in embodiments. Pre-stretching is typically easier to apply than post-stretching and may, therefore, be preferred. If several tendons are present, they can be tensioned separately or simultaneously.

In embodiments, the tendon can be longer than the final composite wood. This has the advantageous of enabling a simple grip on the tendon to be maintained during tensioning in the form of one or more protruding parts, which therefore allows the necessary tensile force to be exerted on it. The tendon can then be cut to the size of the composite wood.

In embodiments, the method can comprise a step d of: (d) adhering of a covering to a surface of the composite wood. In embodiments, step d can be carried out during or after step c; preferably during. The adhesion can, for example, be achieved by contacting the covering with the binding agent before the latter has fully hardened.

In embodiments, the method may include a step e, after step c, comprising of: (e) cutting of the composite wood. In this connection, the cutting can take place in parallel with the tendon or the tendon can be cut through. Due to the adhesion of the tendon along its length through the composite wood, the pre-stress and thus the internal compression force are maintained when a tendon is cut through.

In embodiments, the method can comprise a step a', before step a, of: (a') shredding of wood to form the wood chips. In embodiments, the wood can be shredded using a wood chipper.

In embodiments, any characteristic of any embodiment of the second aspect may, independently, be as described accordingly for any element of another aspect.

A third aspect of this invention relates to the use of a tendon in a composite wood to strengthen the composite wood, whereby the composite wood comprises a binding agent, and in which the binding agent is an adhesive with a swelling capacity.

The reinforcement can be, for example, an improved resistance to load (in particular tensile stress) and/or a higher elasticity and/or a better dimensional stability (e.g. by counteracting curvature, bending and/or shearing).

In embodiments, any characteristic of any embodiment of the third aspect may, independently, be as described accordingly for any element of another aspect.

In a fourth aspect, the present invention relates to a product comprising a composite wood according to an element of the first aspect.

In embodiments, the product can be a building material. The building material can be, for example, a floorboard, a furniture shelf or a support beam. In embodiments, the product can be a road plate.

In embodiments, any characteristic of any embodiment of the fourth aspect may, independently, be as described accordingly for any embodiment of another aspect.

The invention will now be described on the basis of a detailed description of various examples. However, it is clear that other elements of this invention can also be configured, according to the knowledge of the person skilled in the art, without departing from the technical instructions of the present invention. The invention is, therefore, limited only by the accompanying claims.

### Example

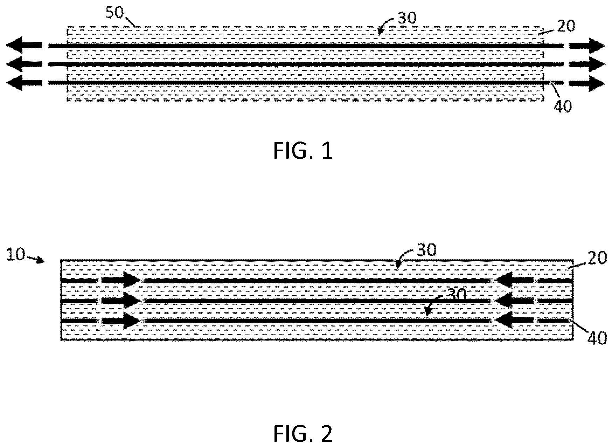

With reference to FIG 1, a mixture of wood chips (20) (e.g. consisting of the Azobé wood species) with a binding agent (30) (e.g. a Rectavit Rectan polyurethane adhesive) is poured into a mould (50) comprising a number of tendons (40) (e.g. 6). For example, the tendons (40) can have a length of 6 m. The tendons (40) are stressed by pre-stretching (e.g. under a tensile force of 150 kN) and held in place while the mixture cures and binds around the tendon (40). Simultaneously, an optional covering (not shown in FIG 1) can also be fitted. In this way, the mixture can be poured over a solid wood base board and a solid wood top board can be placed on top of it. When the binding agent cures, the adhesion of the optional coating is immediately achieved. Alternatively, the optional coating can also be applied to the composite wood afterwards.

After complete (e.g. 6 h) or partial (e.g. 3 h) curing, the tensile force on the tendons (40) is stopped, the composite wood (10) is removed from the mould (50) and the tendons (40) are cut to length. The result is a composite wood (10) wherein the tendons (40) exert a continuous pressure load on the composite wood (10); as shown in FIG 2.

## Claims

1. A composite wood (10) comprising:
i. wood chips (20), wherein the wood chips (20) comprise fibres and/or threads and/or pieces and/or chunks of hardwood and/or coniferous wood and/or bamboo,
ii. a binding agent (30), in which the binding agent (30) is an adhesive with swelling properties, and
iii. a tendon (40);
in which the wood chips (20) and the binding agent (30) are cured around the tendon (40).

2. The composite wood (10) according to claim 1, wherein the tendon (40) is a metal wire.

3. The composite wood (10) according to one of the preceding claims, in which the binding agent is a polyurethane adhesive.

4. The composite wood (10) according to any one of the preceding claims, wherein the wood chips (20) have a length of 5 to 120 mm, preferably from 10 to 80 mm.

5. The composite wood (10) according to any one of the preceding claims, wherein at least one surface of the composite wood comprises a covering.

6. The composite wood (10) according to claim 5, wherein the covering is a solid wood covering.

7. A method for making a composite wood (10) as defined in any one of claims 1 to 6 comprising:
a. mixing of wood chips (20) with a binding agent (30) to form a mixture, in which the wood chips (20) comprise fibres and/or threads and/or pieces and/or lumps of hardwood and/or softwood and/or bamboo, and wherein the binding agent (30) is an adhesive with swelling capacity,
b. application of the mixture around a tendon (40), and
c. curing of the mixture around the tendon (40);
wherein the tendon is mechanically stressed before, during or after step c.

8. The method according to claim 7, comprising a step a', before step a, of:
a'. shredding of wood to form the wood chips (20).

9. The method according to claim 7 or 8, wherein the tendon (40) is stretched under a tensile force of 50 to 250 kN, preferably 100 to 200 kN.

10. The method according to one of claims 7 to 9, further comprising a step d of:
d. adhesion of a covering to a surface of the composite wood.

11. Use of a tendon (40) in a composite wood (10) for reinforcement of the composite wood (10), wherein the composite wood (10) comprises a binding agent (30), and in which the binding agent (30) is an adhesive with a swelling capacity.

12. Use according to claim 11, wherein the binding agent is a polyurethane adhesive.

13. A product comprising a composite wood (10) as defined in any of claims 1 to 6.

14. The product according to claim 13, being a building material.

15. The product according to claim 13 or 14, being a road plate.
